# EUROPÄISCHE PATENTSCHRIFT

(11) **EP 2 142 471 B1**
(45) Veröffentlichungstag und Bekanntmachung des Hinweises auf die Patenterteilung: **09.02.2011**
(21) Anmeldenummer: 08734361.2
(22) Anmeldetag: 11.03.2008
(51) Int. Cl.: C01B 11/02, C25B 1/26

(54) **VERFAHREN ZUR HERSTELLUNG VON CHLORDIOXID**
METHOD FOR PRODUCING CHLORINE DIOXIDE
PROCEDE DE PRODUCTION DE DIOXYDE DE CHLORE

(30) Priorität: 12.04.2007 DE 102007017625
(43) Veröffentlichungstag der Anmeldung: 13.01.2010
(73) Patentinhaber: Khalaf, Hosni, 30900 Wedemark (DE)
(72) Erfinder: DEUTSCH, Andreas, 31275 Lehrte OT Arpke (DE); DÖRFER, Hans-Jürgen, 38179 Schwülper (DE); KHALAF, Hosni, 30900 Wedemark (DE)
(74) Vertreter: Scheffler, Jörg
(86) Internationale Anmeldenummer: PCT/DE2008/000420
(87) Internationale Veröffentlichungsnummer: WO 2008/125075

(56) Entgegenhaltungen:
- EP-A- 0 328 818
- US-A- 3 975 284
- US-A- 5 324 497

## Beschreibung

Die Erfindung betrifft ein Verfahren zur Herstellung von Chlordioxid durch Reaktion von Chlor und Chlorit.

Zur Desinfektion von Trink- und Brauchwasser werden Chlordioxid-Zusätze beispielsweise im Bereich von Industriebetrieben, Getränkeherstellern, Gastronomie und Krankenhäusern, aber auch in Wohnhäusern eingesetzt, um eine zuverlässige Desinfektion und Entkeimung des Trink- und Brauchwassers zu erreichen. In Wassersystemen bilden sich ohne eine wirkungsvolle Desinfektion an den wasserberührten Oberflächen mit der Zeit Biofilme. Mikroorganismen besiedeln diese Oberflächen und bewirken durch ihre Stoffwechselprodukte eine als Biofilm bezeichnete Schleimbildung. Der gallertartige Film aus extrazellulären polymeren Substanzen bietet ideale Bedingungen - nämlich Nahrung und Schutz - für krankheitserregende Mikroorganismen, wodurch es zu permanenter Kontamination des Trink- und Prozesswassers kommt.

Für die Wasserdesinfektion wird neben Chlor aufgrund der sehr guten Desinfektions-, Oxidations- und Desodorierungseigenschaften auch Chlordioxid eingesetzt. Es hat eine wesentlich höhere Oxidationswirkung als Chlor und kann somit auch auf Substanzen, Bakterien, Sporen und Viren einwirken, die von Chlor nicht mehr angegriffen werden. Die sporizide und viruzide Wirkung von Chlordioxid ist bei gleicher Konzentration besser als die von Chlor. Zusätzlich ist die Bildung von organischen Chlorverbindungen praktisch vernachlässigbar. Die Zudosierung von Chlordioxid als Desinfektionsmittel dient dabei insbesondere der Beseitigung von Biofilm, der Desinfektion von Trinkwasser und von Rohrnetz- und Wasserbehälter-Systemen sowie der Legionellenbekämpfung bzw. der Sanierung legionellenbefallener Systeme. Chlordioxid wird derzeit chemisch durch Oxidation von Chlorit oder durch Reduktion von Chlorat gewonnen. Die Herstellung der Chlordioxidlösung kann dabei auf verschiedenen Wegen erfolgen. Die auf dem Reaktionsprinzip basierenden Erzeugeranlagen arbeiten hauptsächlich nach dem Chlorit-/Chlor-Verfahren aus Natriumchloritlösung und Chlorgas oder dem Chlorit-/Säure-Verfahren mit Salzsäure und Natriumchloritlösung. Auf diese Weise wird kontinuierlich die Chlordioxidlösung in der gewünschten Konzentration erzeugt. Nachteil dieses Prinzips ist der hohe Anlagen- und Bedienungsaufwand, der neben den Voraussetzungen einer großtechnischen Anlage auch Fachkenntnisse bei der Bedienung erfordert.

Demgegenüber erfordert die Herstellung einer Chlordioxidlösung aus zwei Komponenten, die hierzu in einem Behälter in Wasser gelöst werden, um so die gewünschte Konzentration zu erzeugen, nur einen geringen Aufwand bei der Bedienung der Anlage. Die Chlordioxidlösung wird durch Lösen von Tabletten oder Pulver-Komponenten in Wasser oder durch Mischen des flüssigen Komponenten-Konzentrats hergestellt. Nach Zugabe der beiden Komponenten in Wasser und einer Reaktionszeit von ca. zwei Stunden ist die Chlordioxidlösung einsatzbereit.

Dieses Verfahren wird in den oben genannten Einsatzbereichen aufgrund der einfachen Anwendung annähernd ausschließlich eingesetzt. Weiterhin sind die Komponenten praktisch unbegrenzt haltbar.

Die Dosierung der Chlordioxidlösung in das Trink- und Brauchwasserleitungsnetz erfolgt mengenproportional zur durchfließenden Wassermenge. Hierzu liefert ein Wasserzähler Impulse entsprechend der Durchflussmenge an die Dosierpumpe, um so ein der Wasserdurchflussmenge proportionales Volumen der Chlordioxidlösung in das Leitungsnetz einzuleiten. Die Dosierung wird unterbrochen, wenn kein Wasserdurchfluss in dem Leitungsnetz erfasst wird.

Die verschiedenen Chlorat-Säure-Reduktionsmittel-Verfahren sind für die Darstellung großer Mengen Chlordioxid geeignet, wie sie beispielsweise in der Papierindustrie Verwendung finden. Ihr Einsatz bedingt aufgrund der hohen Explosionsgefahr zwingend den Einsatz von Reaktoren.

Die zu erzielende Produktkonzentration richtet sich nach der gewünschten Anwendungskonzentration des Chlordioxids. Nach der Deutschen Trinkwasserverordnung ist der Richtwert für die Konzentration an Chlordioxid im Wasser 0,2 ppm.

Die Produktkonzentration sollte aus Sicherheitsgründen unter 4 g/l Chlordioxid liegen. Die Konzentration ist für die Versuchsdurchführungen vorzugsweise im Bereich von 2 bis 3 g/l Chlordioxid zu wählen. Die Bestimmung des Chlor- und des Chlordioxidgehaltes erfolgt nach zwei unterschiedlichen Messmethoden, der sogenannten DPD-Methode und der Jodometrie.

Bei dem elektrochemischen Verfahren zur Herstellung von Chlor mittels NaCl-Elektrolyse entsteht neben Chlor in geringen Mengen Chlordioxid.

Die beim Einsatz von handelsüblicher Hypochloritlösung auftretenden Probleme wie geringe Lagerfähigkeit sowie Handhabung und Bevorratung in Kanistern werden mit der Herstellung des Chlors in der Elektrolyse-Anlage vermieden.

Durch die US 2005/0034997 A1 ist ein elektrochemisches Verfahren zur Herstellung von Chlordioxid bekannt. Der Chlordioxidreaktor bildet dabei gemeinsam mit dem Anodenraum und dem Kathodenraum eine Baueinheit. In der Baueinheit ist ein Füllmaterial enthalten, wobei die Räume durch lonenaustauschermembranen getrennt sind.

Die US 6869517 A1 offenbart ferner ein Elektrolyseverfahren und eine Elektrolysevorrichtung zur Oxidation organischer und anorganischer Substanzen.

Aus der GB 1 426 111 A sowie der DE 2 412 394 A ist jeweils ein Verfahren zur Herstellung von ClO₂ bekannt, bei dem ein Gemisch aus Natriumchlorid und Natriumchlorit einer Elektrolysezelle zugeführt wird. Im Anodenraum setzt sich das gebildete Chlor direkt mit Natriumchlorit zu Chlordioxid um. Hierbei erfolgt die Herstellung von Chlordioxid im Anodenraum. Demzufolge findet die Chlordioxid-Herstellung während der Elektrolyse unter Stromfluss statt.

Gemäß der FR 2 086 624 A wird im Oberteil des Reaktors eine Chlorlösung bestimmter Konzentration durch Lösen des Chlors im Wasser hergestellt. Das Unterteil des Reaktors besteht aus drei Zonen. In einer Zone befindet sich die Natriumchloritlösung, in der die Reaktion zwischen der Chlorlösung aus dem Oberteil des Reaktors mit der Natriumchloritlösung zu Chlordioxid erfolgt. Eine elektrochemische Chlorherstellung wird nicht beschrieben.

Ferner offenbart die DE 31 18 795 C2 die Elektrolyse von Chloritlösung zur Herstellung von Chlordioxid.

Der Erfindung liegt die Aufgabe zugrunde, ein Verfahren zur Herstellung von Chlordioxid zu entwickeln, durch das Chlordioxid wirtschaftlich und mit einem vergleichsweise geringen Aufwand hergestellt werden kann.

Diese Aufgabe wird erfindungsgemäß mit einem Verfahren gemäß den Merkmalen des Anspruchs 1 gelöst. Die weitere Ausgestaltung der Erfindung ist den Unteransprüchen zu entnehmen.

Erfindungsgemäß ist also ein Verfahren zur Herstellung von Chlordioxid durch Reaktion von Chlor und Chlorit vorgesehen, bei dem in einem ersten Verfahrensschritt [1] Chlor aus einer gesättigten Natriumchloridlösung elektrochemisch erzeugt wird, wobei in einem Kathodenraum Natriumhydroxidlösung und Wasserstoffgas und in einem Anodenraum Chlor entsteht, und in einem zweiten Verfahrensschritt [2] das entstandene Chlor in einem Reaktor mit Natriumchlorit zu Chlordioxid reagiert. Das wirtschaftlich mit einem vergleichsweise geringen Aufwand realisierbare Verfahren zur Herstellung von Chlordioxid mittels Elektrolyse aus gesättigter Kochsalzlösung arbeitet entsprechend den Reaktionsgleichungen

2 NaCl+2H₂O → 2NaOH+H₂+Cl₂ [1]

und

2 NaClO₂ + Cl₂ → 2 ClO₂ + 2 NaCl [2].

Dabei kann der in dem ersten Verfahrensschritt entstehende Wasserstoff problemlos entsorgt oder einer weiteren Verwendung zugeführt werden, während die Natriumhydroxidlösung verschiedenen Anwendungen dieses Verfahrens dient.

Eine besonders vorteilhafte Ausgestaltung des erfindungsgemäßen Verfahrens wird dabei dadurch realisiert, dass die im ersten Verfahrensschritt im Kathodenraum erzeugte Natriumhydroxidlösung insbesondere kontinuierlich in Natriumchloritlösung eingeleitet wird und daraus Chlordioxidlösung hergestellt wird. Hierdurch steht die dabei entstehende Chlordioxidlösung für einen kontinuierlichen Einsatz zur Verfügung, sodass eine besonders wirtschaftliche Herstellung der gewünschten Chlordioxidlösung mit geringem Aufwand sichergestellt werden kann.

Besonders erfolgversprechend ist zudem eine Abwandlung des erfindungsgemäßen Verfahrens, bei welchem zur Herstellung der Chlordioxidlösung gasförmiges Chlor in die Natriumchloritlösung eingeleitet wird, um so einen weiter verbesserten Verlauf im zweiten Verfahrensschritt bei der Reaktion des Chlors mit der Natriumchloritlösung zu Chlordioxid (ClO₂) zu erreichen.

Darüber hinaus kann in besonders sinnvoller Weise sowohl das gelöste Chlor als auch das gasförmige Chlor in dem zweiten Verfahrensschritt zur Herstellung von Chlordioxid genutzt werden, sodass ein Chlorverlust vermieden werden kann und die Umsetzung zu Chlordioxid in optimaler Weise erfolgen kann.

Dabei erweist es sich als besonders gewinnbringend, wenn zur Herstellung der Chlordioxidlösung das gasförmige Chlor in Wasser eingeleitet und der Natriumchloritlösung (NaClO₂) zugeführt wird, um so durch das in dem Wasser gelöste Chlor eine verfahrenstechnisch zuverlässige und mit geringem Aufwand realisierbare Anlage zu ermöglichen.

Insbesondere erweist es sich dabei als besonders praxisnah, wenn zur Herstellung der Chlordioxidlösung das in dem Anodenraum elektrochemisch behandelte, in Wasser gelöste Natriumchlorid und das darin gelöste Chlor in Säurelösung eingeleitet und Natriumchloritlösung (NaClO₂) zudosiert wird, was eine einfache Beherrschbarkeit des Verfahrens mit einer wirtschaftlichen Herstellung des Chlordioxids vereint.

Eine andere, ebenfalls besonders gewinnbringende Ausführungsform wird dadurch geschaffen, dass im ersten Verfahrensschritt Chlor aus gesättigter Natriumchloridlösung elektrochemisch im Membranverfahren erzeugt wird. Aufgrund der Undurchlässigkeit der Membran für Chlor-Ionen wird eine optimale Trennung der Natriumhydroxidlösung und des Wasserstoffs einerseits von dem Chlor andererseits sichergestellt. Durch das elektrochemische Verfahren wird direkt am Einsatzort aus gesättigter NaCl-Lösung (Sole) und Gleichstrom ein konzentriertes Gemisch als sogenannte Fettsole produziert. Dabei bilden der Kathodenraum und der Anodenraum einerseits sowie der Reaktor andererseits getrennte Einheiten. Hierdurch wird sichergestellt, dass die Chlordioxidherstellung nicht in der Elektrolysezelle, sondern hiervon unabhängig in dem Reaktor erfolgt.

Weiterhin erweist es sich als besonders praxisnah, wenn mittels der im Kathodenraum erzeugten Natriumhydroxidlösung ein pH-Wert des im zweiten Verfahrensschritt hergestellten Chlordioxids zwischen pH 4 und pH 10, insbesondere im Wesentlichen pH 7, eingestellt wird, um so mittels der Natronlauge die Chlordioxidlösung in einem Neutralbereich einstellen zu können. Die bakterizide Leistungsfähigkeit der Chlordioxidlösung ist bei pH-Werten zwischen pH 4 und pH 10 annährend konstant.

In dem Reaktor entsteht neben der Chlordioxidlösung auch ein Anteil von Chlordioxid in seiner gasförmigen Phase. Eine besonders wirtschaftliche Herstellung des Chlordioxids wird gemäß einer weiteren erfolgversprechenden Abwandlung dann erreicht, wenn das in dem zweiten Verfahrensschritt hergestellte, in der gasförmigen Phase befindliche Chlordioxid (ClO₂) mit der in dem Kathodenraum erzeugten Natriumhydroxidlösung (NaOH) zu Natriumchlorit (NaClO₂) reagiert und als Ausgangsstoff für den zweiten Verfahrensschritt [2] genutzt wird, um so eine optimale Qualität des erzeugten Chlordioxids sicherzustellen.

Ein bedeutender Vorteil des Verfahrens ist dessen Eignung für einen sehr weiten Anwendungsbereich von kleinen bis hin zu großtechnischen Anlagen. Ein weiterer Vorteil ist die bedarfsweise Herstellung von Chlordioxid sowohl kontinuierlich oder auch diskontinuierlich.

Weiterhin hat sich eine Ausführungsform als besonders gewinnbringend erwiesen, bei welcher zur Maximierung der Ausbeute und/oder Geschwindigkeit der Reaktion die Konzentrationen der Reaktionspartner, der pH-Wert und/oder die Temperatur optimiert werden zur Herstellung einer bedarfsgerechten und an die jeweiligen Umstände nahezu beliebig anpassbaren Chlordioxidlösung.

In ähnlicher Weise kann dabei gemäß einer weiteren zweckmäßigen Gestaltung des Verfahrens die Bildung von Chlordioxid durch Einstellung verfahrenstechnischer Parameter, wie insbesondere des Volumenstroms, der Temperatur, des Drucks, der elektrischen Leistung, der Stromstärke und/oder der Spannung beeinflusst werden, um so eine weitgehende Automatisierbarkeit und einfache Steuerbarkeit des Verfahrensverlaufes zu erreichen.

Dabei ist es besonders gewinnbringend, wenn die im ersten Verfahrensschritt bei der elektrochemischen Behandlung gemessene Stromstärke als Regelgröße für eine Fördereinheit für die Zufuhr des Natriumchlorits dient. Insbesondere ist die zeitlich produzierte Menge an Chlor von der Stromstärke und dem Volumenstrom des zu elektrolysierenden Mediums abhängig.

Wichtige Einflussparameter auf die Chlordioxidkonzentration, ausgehend von einer konstanten Chlorproduktion, sind die Variation der Chlorkonzentration durch Verdünnung mit Wasser oder die Änderung des Volumenstromes und der Konzentration der Natriumchloridlösung, die Änderung der Reaktionsform des Chlors - entweder ausschließlich in seiner gasförmigen Phase oder als Gemisch in Form von Chlorgas und Fettsole aus dem Anodenraum - sowie die Änderung des pH-Wertes der Reaktionspartner.

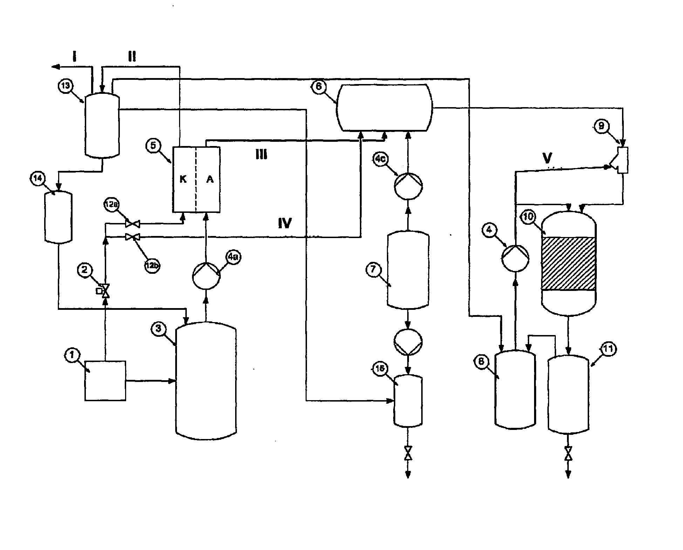

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipdarstellung den Aufbau einer Anlage zur Durchführung des erfindungsgemäßen Verfahrens zur Herstellung von Chlordioxid. Dabei wird zunächst in einem Solebehälter *(3)* eine Natriumchloridlösung durch Weichwasserzufuhr aus einer Entkalkungsanlage *(1)* erzeugt, welche dann mittels einer Pumpe *(4a)* einer Elektrolyseeinheit *(5)* zugeführt wird. Der Elektrolyseeinheit *(5)* ist bedarfsweise auch Weichwasser mittels eines Drosselventils *(12a)* sowie eines Magnetventils *(2)* aus der Entkalkungsanlage *(1)* zuführbar.

In der Elektrolyseeinheit *(5)* entstehen in einem ersten Verfahrensschritt aus der gesättigten Natriumchloridlösung in einem Kathodenraum *(K)* Natriumhydroxidlösung und Wasserstoffgas und in einem von dem Kathodenraum *(K)* getrennten Anodenraum *(A)* Chlor. Aus dem Anodenraum *(A)* gelangen Chlorgas und Fettsole, bestehend aus im Wasser gelösten Natriumchlorid und Chlor, in einen Sammelbehälter *(6),* dem mittels eines Drosselventils (12b) sowie des Magnetventils *(2)* Weichwasser aus der Entkalkungsanlage *(1)* zuführbar ist. Aus einem Behälter *(7)* ist mittels einer Pumpe *(4b)* dem Sammelbehälter *(6)* weiterhin eine Säure, insbesondere Salzsäure, Natriumhydrogensulfat, Schwefelsäure oder Phosphorsäure, zuführbar.

In einem zweiten Verfahrensschritt wird die Fettsole unter Zufuhr von Natriumchloritlösung, welche aus einem Behälter *(8)* mittels einer weiteren Pumpe *(4c)* einer Impfstelle *(9)* zugeführt wird, in einen Reaktor *(10)* eingeleitet, in dem das Chlor mit dem Natriumchlorit zu Chlordioxid reagiert und in dem der pH-Wert kleiner als 3 eingestellt wird. Das Chlordioxid wird anschließend in einem Behälter *(11)* aufgefangen und kann von dort zur weiteren Verwendung mittels eines Ablassventils bedarfsweise entnommen werden. Aus diesem Behälter *(11)* verdrängtes gasförmiges Chlordioxid darf nicht in die Umgebung gelangen und wird deshalb in den Behälter *(8)* geleitet. Dort wird das Chlordioxid in Chlorit umgewandelt. Die vom Wasserstoff im Behälter *(13)* abgetrennte Natriumhydroxidlösung wird unter anderem verwendet, um den pH-Wert des Chlordioxids in einem neutralen Bereich einzustellen. Außerdem dient die Natriumhydroxidlösung auch als Basis für die Herstellung von Natriumchloritlösung, indem sich durch die Zufuhr des Natriumchlorits der gewünschte pH-Wert einstellen lässt.

Die Natriumhydroxidlösung kann vorzugsweise auch mittels Kationenaustauscher *(14)* und Salzsäure in Natriumchlorid umgewandelt werden, welches als Ausgangsstoff für den ersten Verfahrensschritt dem Solebehälter *(3)* zugeführt wird. Ferner kann die Natriumhydroxidlösung in Verbindung mit Phosphorsäure zur Herstellung eine korrosionshemmenden Mittels, vorzugsweise Trinatriumphosphat bzw. Dinatriummonohydrogenphosphat, verwendet werden, indem Phosphorsäure aus dem Behälter *(7)* mittels einer Pumpe *(4d)* der in dem Behälter *(15)* vorhandenen Natriumhydroxidlösung zudosiert wird. Die Phosphatlösung kann aus dem Behälter *(15)* zwecks einer weiteren Verwendung mittels eines Ablassventils entnommen werden.
I: H₂
II: NaOH + H₂
III: CL₂(g) + Fettsole
IV: Weichwasser
V: NaClO₂

## Patentansprüche

1. Verfahren zur Herstellung von Chlordioxid durch Reaktion von Anolytlösung mit Chlorit, bei dem in einem ersten Verfahrensschritt Chlor aus gesättigter Natriumchloridlösung elektrochemisch erzeugt wird, wobei in einem Kathodenraum *(K)* Natriumhydroxidlösung und Wasserstoffgas und in einem Anodenraum *(A)* Chlor entsteht, und in einem zweiten Verfahrensschritt das entstandene Chlor in einem Reaktor *(10)* mit Natriumchlorit zu Chlordioxid reagiert, wobei der Kathodenraum *(K)* und der Anodenraum *(A)* einerseits sowie der Reaktor *(10)* andererseits getrennte Einheiten bilden, sodass das Chlordioxid außerhalb der Elektrolysezelle in dem Reaktor *(10)* hergestellt wird.

2. Verfahren nach Anspruch 1, **dadurch gekennzeichnet, dass** die im ersten Verfahrensschritt erzeugte Anolytlösung mit Wasser versetzt wird.

3. Verfahren nach Anspruch 2, **dadurch gekennzeichnet, dass** die im ersten Verfahrensschritt erzeugte Anolytlösung mit Wasser und Säure versetzt wird.

4. Verfahren nach den Ansprüchen 1, 2 oder 3, **dadurch gekennzeichnet, dass** zur Herstellung der Chlordioxidlösung die Lösung aus einem Behälter *(6)* zusammen mit Natriumchloritlösung aus einem Behälter *(8)* in den Reaktor *(10)* zugeführt wird.

5. Verfahren nach zumindest einem der vorhergehenden Ansprüche, **dadurch gekennzeichnet, dass** das Verfahren kontinuierlich oder diskontinuierlich betrieben wird.

6. Verfahren nach zumindest einem der vorhergehenden Ansprüche, **dadurch gekennzeichnet, dass** mittels der im Kathodenraum *(K)* erzeugten Natriumhydroxidlösung ein pH-Wert des im zweiten Verfahrensschritt hergestellten Chlordioxids zwischen pH 4 und pH 10, insbesondere im Wesentlichen pH 7, eingestellt wird.

7. Verfahren nach zumindest einem der vorhergehenden Ansprüche, **dadurch gekennzeichnet, dass** das in dem zweiten Verfahrensschritt hergestellte, in der gasförmigen Phase befindliche Chlordioxid mit der Natriumchloritösung (*Behälter 8*) in den Reaktor *(10)* eingeleitet und als Ausgangsstoff für den zweiten Verfahrensschritt genutzt wird.

8. Verfahren nach zumindest einem der vorhergehenden Ansprüche, **dadurch gekennzeichnet, dass** die im ersten Verfahrensschritt bei der elektrochemischen Behandlung gemessene Stromstärke als Regelgröße für eine Fördereinheit für die Zufuhr des Natriumchlorits verwendet wird.

9. Verfahren nach zumindest einem der vorhergehenden Ansprüche, **dadurch gekennzeichnet, dass** die vom Wasserstoff abgetrennte Natriumhydroxidlösung *(13)* zur Herstellung von Natriumchloritlösung (*behälter 8*) sowie von Phosphatlösungen *(15)* und von Natriumchloridlösungen *(3)* mittels lonenaustauscher *(14)* eingesetzt wird.

10. Verfahren nach zumindest einem der vorhergehenden Ansprüche, **dadurch gekennzeichnet, dass** das Verfahren in einem Reaktionsreaktor *(10)* durchgeführt wird, in dem eine Reynolds-Zahl größer als 2.320 eingestellt wird.

11. Verfahren nach zumindest einem der vorhergehenden Ansprüche, **dadurch gekennzeichnet, dass** in dem Reaktionsreaktor *(10)* turbulenzerzeugende Elemente angeordnet sind.

## Claims

1. Process for producing chlorine dioxide by reaction of anolyte solution with chlorite, in which chlorine is produced electrochemically from saturated sodium chloride solution in a first process step, with sodium hydroxide solution and hydrogen gas being formed in a cathode space *(K)* and chlorine being formed in an anode space *(A),* and the chlorine formed reacts with sodium chlorite in a reactor *(10)* to form chlorine dioxide in a second process step, where the cathode space *(K)* and the anode space *(A)* on the one hand and the reactor *(10)* on the other hand form separate units so that chlorine dioxide is produced outside the electrolysis cell in the reactor *(10).*

2. Process according to Claim 1, **characterized in that** the anolyte solution produced in the first process step is admixed with water.

3. Process according to Claim 2, **characterized in that** the anolyte solution produced in the first process step is admixed with water and acid.

4. Process according to Claims 1, 2 or 3, **characterized in that**, to produce the chlorine dioxide solution, the solution from a container *(6)* is fed together with sodium chlorite solution from a container *(8)* into the reactor *(10).*

5. Process according to at least one of the preceding claims, **characterized in that** the process is operated continuously or batchwise.

6. Process according to at least one of the preceding claims, **characterized in that** a pH of the chlorine dioxide produced in the second process step of from pH 4 to pH 10, in particular essentially pH 7, is set by means of the sodium hydroxide solution produced in the cathode space *(K).*

7. Process according to at least one of the preceding claims, **characterized in that** the gaseous chlorine dioxide produced in the second process step is introduced together with the sodium chlorite solution (*container 8)* into the reactor *(10)* and used as starting material for the second process step.

8. Process according to at least one of the preceding claims, **characterized in that** the current measured in the electrochemical treatment in the first process step is used as regulating variable for a transport unit for feeding in the sodium chlorite.

9. Process according to at least one of the preceding claims, **characterized in that** the sodium hydroxide solution *(13)* which has been separated off from the hydrogen is used for producing sodium chlorite solution (*container 8)* and phosphate solutions *(15)* and sodium chloride solutions *(3)* by means of ion exchangers *(14).*

10. Process according to at least one of the preceding claims, **characterized in that** the process is carried out in a reaction reactor *(10)* in which a Reynolds number of greater than 2.320 is set.

11. Process according to at least one of the preceding claims, **characterized in that** turbulence-generating elements are arranged in the reaction reactor *(10).*

## Revendications

1. Procédé pour la préparation de dioxyde de chlore par réaction d'une solution d'anolyte avec du chlorite, dans lequel, dans une première étape de procédé, du chlore est produit par voie électrochimique à partir d'une solution saturée de chlorure de sodium, avec formation, dans un espace cathodique (K), d'une solution d'hydroxyde de sodium et d'hydrogène gazeux et, dans un espace anodique (A), de chlore et, dans une deuxième étape, le chlore formé réagit dans un réacteur (10) avec du chlorite de sodium en dioxyde de chlore, l'espace cathodique (K) et l'espace anodique (A) d'une part et le réacteur (10) d'autre part formant des unités séparées de manière telle que le dioxyde de chlore est préparé en dehors de la cellule d'électrolyse dans le réacteur (10).

2. Procédé selon la revendication 1, **caractérisé en ce que** la solution d'anolyte produite dans la première étape de procédé est additionnée d'eau.

3. Procédé selon la revendication 2, **caractérisé en ce que** la solution d'anolyte produite dans la première étape de procédé est additionnée d'eau et d'acide.

4. Procédé selon l'une quelconque des revendications 1, 2 ou 3, **caractérisé en ce que** pour la préparation de la solution de dioxyde de chlore, la solution provenant d'un récipient (6) est introduite ensemble avec une solution de chlorite de sodium provenant d'un récipient (8) dans le réacteur (10).

5. Procédé selon au moins l'une quelconque des revendications précédentes, **caractérisé en ce que** le procédé est exploité en continu ou de manière discontinue.

6. Procédé selon au moins l'une quelconque des revendications précédentes, **caractérisé en ce qu'**au moyen de la solution d'hydroxyde de sodium produite dans l'espace cathodique (K), on règle un pH du dioxyde de chlore préparé dans la deuxième étape de procédé entre pH 4 et pH 10, en particulier essentiellement à pH 7.

7. Procédé selon au moins l'une quelconque des revendications précédentes, **caractérisé en ce que** le dioxyde de chlore préparé dans la deuxième étape de procédé, se trouvant en phase gazeuse, est introduit avec la solution de chlorite de sodium (récipient 8) dans le réacteur (10) et est utilisé comme substance de départ pour la deuxième étape de procédé.

8. Procédé selon au moins l'une quelconque des revendications précédentes, **caractérisé en ce que** l'intensité du courant mesurée dans la première étape de procédé lors du traitement électrochimique est utilisée comme grandeur de réglage pour une unité de transport pour l'alimentation du chlorite de sodium.

9. Procédé selon au moins l'une quelconque des revendications précédentes, **caractérisé en ce que** la solution d'hydroxyde de sodium (13) séparée d'hydrogène est utilisée pour la préparation de la solution de chlorite de sodium (récipient 8) ainsi que de solutions de phosphate (15) et de solutions de chlorure de sodium (3) au moyen d'échangeurs d'ions (14).

10. Procédé selon au moins l'une quelconque des revendications précédentes, **caractérisé en ce que** le procédé est réalisé dans un réacteur de réaction (10) dans lequel on règle un nombre de Reynolds supérieur à 2320.

11. Procédé selon au moins l'une quelconque des revendications précédentes, **caractérisé en ce que** des éléments produisant une turbulence sont disposés dans le réacteur de réaction (10).
